# EUROPEAN PATENT APPLICATION

(11) **EP 1 162 388 A2**
(43) Date of publication of application: **12.12.2001**
(21) Application number: 01113723.9
(22) Date of filing: 05.06.2001
(51) Int. Cl.: F16H 7/08

(54) **Tensioner device**

(30) Priority: 05.06.2000 JP 2000167868
(71) Applicant: TSUBAKIMOTO CHAIN CO., Osaka-shi, Osaka (JP)
(72) Inventor: Namie, Tsutomu, c/o Tsubakimoto Chain Co., Osaka-shi, Osaka (JP); Inoue, Kozo, c/o Tsubakimoto Chain Co., Osaka-shi, Osaka (JP)
(74) Representative: Maisch, Thomas

(57) **Abstract**

A tensioner device (21) having a tensioner unit (22) and a lever (29) urged by the tensioner unit into slide contact with a chain (C) includes a plunger rotation inhibiting mechanism (24b, 32a) disposed between the front end portion of a plunger (24) and a portion of the lever (29) to inhibit the plunger from rotating about the axis thereof such that the front edge of each prong of a ratchet (26) is kept separating from the bottom land of a mating one of rack teeth (24a) formed on an outer surface of the plunger along the axis thereof. The ratchet prong is substantially free from wear and has an improved degree of durability.

## Description

The present invention relates to a tensioner device for used with a chain or belt for applying a proper tension to the chain or belt, and more particularly to such a tensioner device having a mechanism for limiting rotation of a plunger about the axis thereof.

A tensioner device is used for applying an appropriate tension to a chain or belt at all times. The tensioner is comprised of a tensioner and a lever normally urged by a plunger of the tensioner into sliding contact with the chain or belt to apply a tension to the chain or belt.

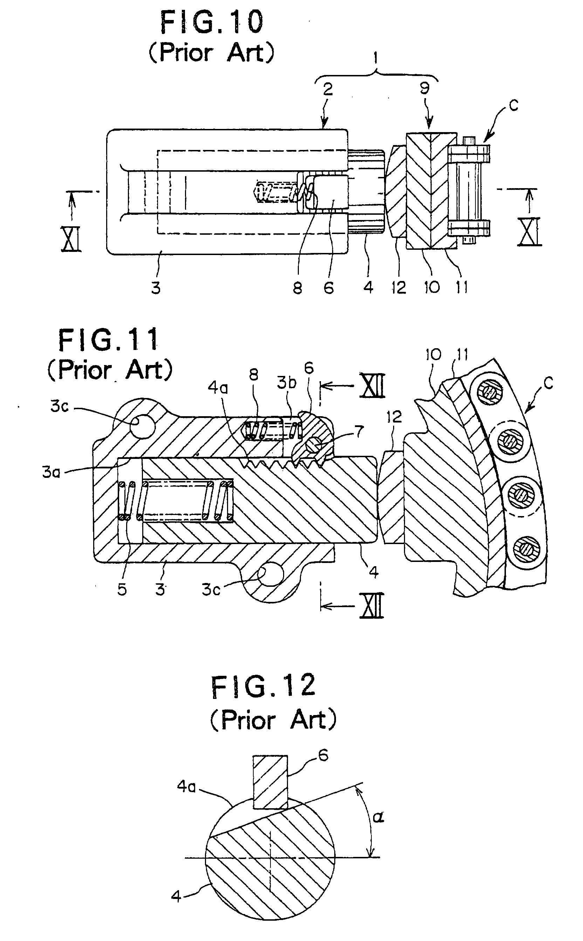

FIGS. 10 through 12 exemplify a conventional tensioner device which is used in combination with a chain C for applying an appropriate tension to the chain C. FIG. 10 is a plan view, with parts shown in cross section, of the conventional tensioner device, FIG. 11 is a cross-sectional view taken along line X1-X1 of FIG. 10, and FIG. 12 is a cross-sectional view taken along line XII-XII of FIG. 11.

As shown in FIGS. 10 and 11, the tensioner device 1 generally comprises a tensioner 2 and a lever 9 and is disposed on a slack side of the chain C.

The tensioner 2 includes a housing 3, a plunger 4 slidably fitted in a plunger accommodating hole 3a formed in the housing 3 with one end projecting outward from the housing 3, a spring 5 acting between the housing 3 and the plunger 4 to urge the plunger 4 in a direction projecting outward from the housing 3, and a ratchet 6 pivotally supported by a pivot pin 7 within a slot 3b formed in the housing 3, the ratchet 6 being urged by a spring 8 to turn in one direction to keep meshing engagement between itself and rack teeth 4a formed on the plunger 4 so as to prevent backward movement of the plunger 4. The tensioner 2 is mounted to, for example, a cylinder block of an engine (neither shown) using mounting holes 3c (FIG. 11) formed in the housing 3.

The lever 9 is composed of a lever body 10, a shoe 11 attached to a front surface of the lever body 10 for sliding contact with the chain C, and a pad 12 attached to a back surface of the lever body 10 for abutment with a front end portion of the plunger 4. The lever 9 has one end (fixed end) pivotally connected to the cylinder block of the engine.

In operation, when the tension in the chain C decreases, the plunger 4 of the tensioner device 1 moves in the projecting direction by the force of the spring 5 so that the lever 9 is urged in a direction to increase the chain tension to such an extent that an appropriate tension is restored. Alternatively, when the chain tension is caused to increase, the plunger 4 moves backward within a backlash of the racket 6 under the reaction of the lever 9.

In the tensioner device 1, when the plunger 4 moves in the projecting direction by the force of the spring 5, or when the plunger 4 moves backward by the reaction of the lever 9, the plunger 4 turns about the axis thereof. As shown in FIG. 12, when the plunger 4 turns about its axis by an angle of α, a front edge of each prong of the latchet 6 abuts against the bottom land of one ratchet tooth 4a. This may cause wear of the ratchet prongs, resulting in an operation failure of the ratchet 6. That is, the ratchet 6 with prong worn away is no longer possible to effectively perform its prescribed operation to prevent the plunger 4 from moving backward.

It is accordingly an object of the present invention to provide a tensioner device having structural features which are capable of preventing rotation of the plunger about the axis thereof to thereby improve the durability of a ratchet prong.

According to the present invention, there is provided a tensioner device comprising a tensioner unit and a lever urged by the tensioner unit to turn in one direction for applying an appropriate tension to a chain or belt. The tensioner unit includes a housing having a plunger accommodating hole formed therein, a plunger slidably fitted in the plunger accommodating hole and urged in a forward direction projecting outward from the housing, the plunger having rack teeth formed on an outer surface of the plunger along the axis the plunger and a front end portion held in contact with a portion of the lever, and a ratchet pivotally mounted within a slot formed in the housing and urged in one direction to engage the rack teeth so as to prevent the plunger from moving backward. The tensioner device further includes a plunger rotation inhibiting mechanism disposed between the front end portion of the plunger and the portion of the lever to inhibit the plunger from rotating about the axis thereof such that a front edge of a prong of the ratchet is kept separating from a bottom land of a mating one of the rack teeth. The the front edge of the ratchet prong is substantially free from wear and has an improved degree of durability.

In one preferred form of the present invention, the plunger rotation inhibiting mechanism has a projection formed by removing opposite sides of the front end portion of the plunger, and a recessed portion formed in the portion of the lever and receiving therein the projection of the plunger. The recessed portion may be formed in either a pad attached to the back surface of a lever body of the lever, or the back surface of the lever body.

In another preferred form of the present invention, the plunger rotation inhibiting mechanism has a recessed portion formed in the front end portion of the plunger diametrically across an end face of the front end portion, and a projection formed on the portion of the lever and received therein the recessed portion of the plunger. The projection may be formed on either a pad attached to the back surface of a lever body of the lever, or the back surface of the lever body.

Certain preferred structural embodiments of the present invention will now be described in detail, by way of example only, with reference to the accompanying drawings, in which:
FIG. 1 is a plan view, with parts shown in cross section, of a tensioner device according to a first embodiment of the present invention;
FIG. 2 is a cross-sectional view taken along line II-II of FIG. 1;
FIG. 3 is a cross-sectional view taken along line III-III of FIG. 2, showing a plunger and a ratchet of the tensioner device;
FIG. 4 is a perspective view of the plunger;
FIG. 5 is a plan view showing a modification of a portion of the tensioner device located near a front end of the plunger;
FIG. 6 is a plan view, with parts shown in cross section, of a tensioner device according to a second embodiment of the present invention;
FIG. 7 is a cross-sectional view taken along line VII-VII of FIG. 6;
FIG. 8 is a perspective view of a plunger shown in FIG. 6;
FIG. 9 is a plan view showing a modification of a portion of the tensioner device shown in FIG. 6 which is located near a front end of the plunger;
FIG. 10 is a plan view, with parts shown in cross section, of a conventional tensioner device;
FIG. 11 is a cross-sectional view taken along line X1-XI of FIG. 10; and
FIG. 12 is a cross-sectional view taken along line XII-XII of FIG. 11, showing a plunger and a ratchet of the conventional tensioner device.

The following description is merely exemplary in nature and is in no way intended to limit the invention or its application or uses.

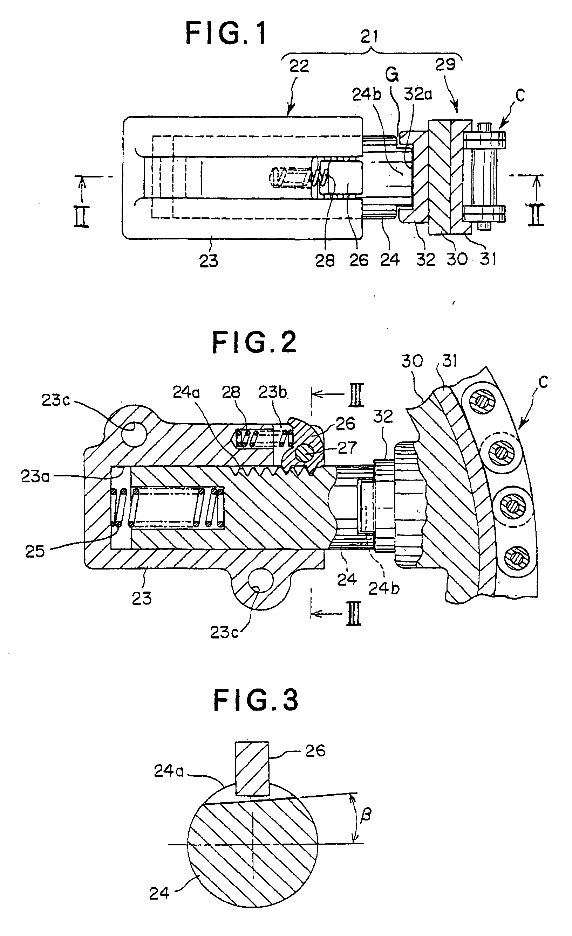

Referring now to the drawings and FIGS. 1 and 2 in particular, there is shown a tensioner device 21 according to a first embodiment of the present invention. The tensioner device 21 comprises a tensioner 22 and a lever 29 and is disposed on a slack side of a chain C.

The tensioner 22 includes a housing 23 having a plunger accommodating hole 23a formed therein, a plunger 24 slidably fitted in the plunger accommodating hole 23a with one end projecting outward from the plunger accommodating hole 23a, a plunger spring 25 received in the plunger accommodating hole 23a and acting between the housing 23 and the plunger 24 to urge the latter in a direction projecting outward from the housing 23, and a ratchet 26 pivotally mounted by a pivot pin 27 within a slot 23b formed in the housing 23, the ratchet being urged by a ratchet spring 28 in one direction to keep meshing engagement between itself and ratchet teeth 24a formed in an outer surface of the plunger 24 along the axis thereof so that the plunger 24 is prevented from moving backward. The tensioner 22 is mounted to, for example, of a cylinder block of an engine (neither shown) by using mounting holes 23c (FIG. 2) of the housing 23.

The lever 29 is composed of a lever body 30, a shoe 31 attached to a front surface of the lever body 30 for sliding contact with the chain C, and a pad 32 attached to a back surface of the lever body 30 for abutment with a front end portion of the plunger 24. The lever 29 has one end (fixed end) pivotally connected to the cylinder block of the engine.

In operation of the tensioner device 21, when the tension in the chain C decreases, the plunger 24 moves in the projecting or forward direction (rightward in FIGS. 1 and 2) by the force of the plunger spring 25 to thereby restore an appropriate tension in the chain C. Alternatively, when the tension in the chain C increases, the plunger 24 moves backward (leftward in FIGS. 1 and 2) within a backlash of the ratchet 26 by the reaction of the lever 29, but further backward movement of the plunger 24 is prevented by meshing engagement between prongs of the ratchet 26 and meting ones of the rack teeth 24a.

The tensioner device 21 is structurally and functionally similar to the conventional tensioner device 1 shown in FIGS. 10 and 11 but differs therefrom in that it further has a mechanism disposed between the front end of the plunger 24 and the lever 29 for inhibiting the plunger 24 from moving about the axis thereof.

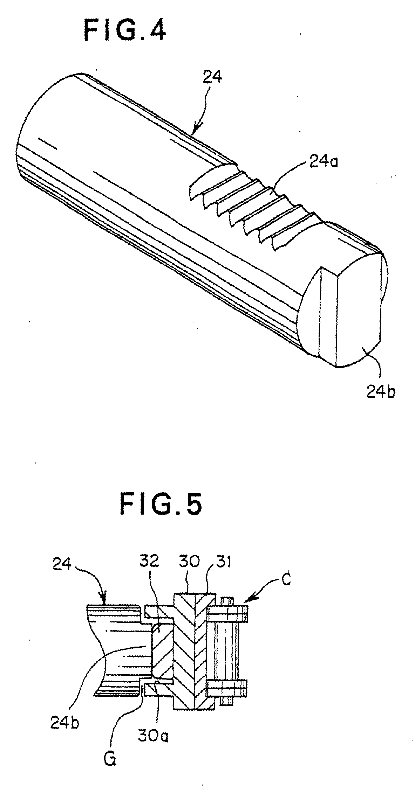

The plunger rotation inhibiting mechanism will be described below in greater detail with reference to FIGS. 1 to 4. As described above, the plunger 24 is assembled in the housing 23 of the tensioner 22. As best shown in FIG. 4, the front end portion of the plunger 24 is cut off or removed at opposite sides so as to form a flat tang-like projection 24b. On the other hand, as shown in FIGS. 1 and 2, the pad 32 forming a part of the lever 29 has a grooved or recessed portion 32a receptive of the tang-like projection 24b of the plunger 24. The tang-like projection 24b of the plunger 24 and the recessed portion 32a of the pad 32 engage together to inhibit rotation of the plunger 24 about the axis thereof and, thus, they 24b, 32a jointly form the above-mentioned plunger rotation inhibiting mechanism. As in the illustrated embodiment, the projection 24b and the recessed portion 32a may be so designed as to fit together with a slight gap G (FIG. 1) defined therebetween.

FIG. 5 shows a modified form of the plunger rotation inhibiting mechanism of the first embodiment, wherein the recessed portion is formed in the back surface of the lever body 30 as at 30a in place of the pad 32. The tang-like projection 24b formed on the front portion of the plunger 24 is received in the recessed portion 30a of the lever body 30 and engageable with the recessed portion 30a to thereby inhibit the plunger 24 from rotating about the axis thereof. As shown in FIG. 5, the projection 24b and the recessed portion 30a may be so designed as to fit together with a slight gap G defined therebetween.

In the tensioner device 21 of the foregoing construction, when the plunger 24 moves in the forward or projecting direction by the force of the plunger spring 25, or when the plunger 24 moves backward by the reaction of the lever 29, the plunger 24 tends to turn or rotate about the axis thereof. In this instance, however, since the tang-like projection 24b formed on the front end of the plunger 24 engages the recessed portion 32a formed in the pad 32 (FIGS. 1 and 2) or the recessed portion 30a formed in the lever body 30 (FIG. 5), rotation of the plunger 24 about the axis thereof is inhibited.

More specifically, due to the presence of the slight gap G (FIGS. 1 and 5) between the projection 24b and the recessed portion 32a or 30a, the plunger 24 is allowed to turn in one direction about the axis thereof through a small angle β, as shown in FIG. 3, but further rotation of the plunger 24 is prevented by engagement between the projection 24b and the recessed portion 32a, 30a. In this instance, as shown in FIG. 3, a front edge of each prong of the ratchet 26 is kept separating from a mating bottom land of the rack teeth 24. The ratchet prong is, therefore, free from wear and has an improved degree of durability. The ratchet 26 is able to perform its subscribed function to prevent backward movement of the plunger 24 over a long period of use.

The tang-like projection 24b and the recessed portion 32a, 30a can be easily produced by machining and do not require high machining accuracy. Accordingly, the plunger rotation inhibiting mechanism formed by the projection 24b and recessed portion 32a, 30a can be manufactured at a relatively low cost.

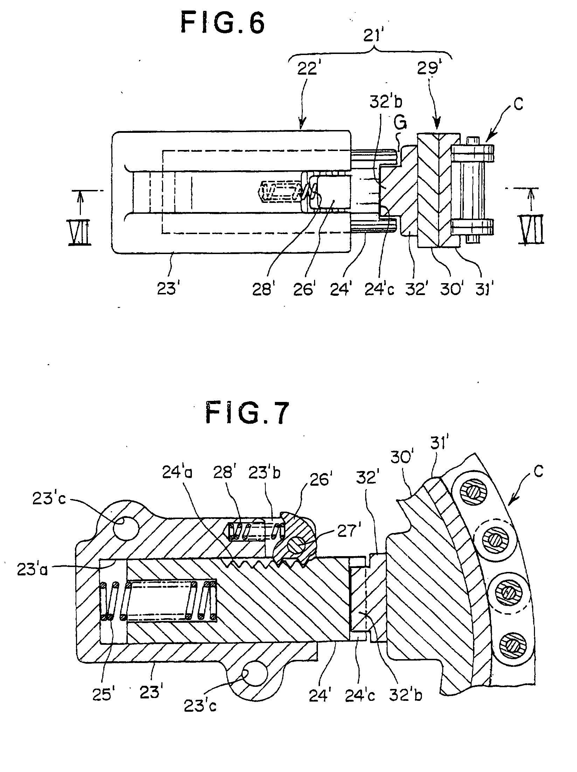

FIGS. 6 through 9 show a tensioner device 21' according to a second embodiment of the present invention. The tensioner device 21' is substantially the same as the tensioner device 21 of the first embodiment shown in FIGS. 1 to 5 except for the structure of a plunger rotation inhibiting mechanism. Accordingly, following description will be limited to the plunger rotation inhibiting mechanism. In FIGS. 6-9, these parts which are the same or corresponding to those shown in FIGS. 1-5 are designated by the same reference characters with a prime mark affixed thereto

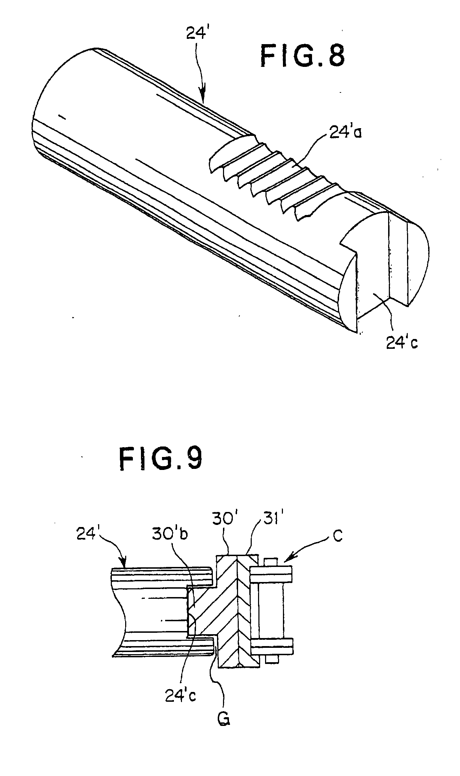

As shown in FIGS. 6 and 7, a tensioner 22' of the tensioner device 21' has a plunger 24' assembled in a housing 23' of the tensioner 22'. As best shown in FIG. 8, a front end portion of the plunger 24' has a groove extending diametrically across an end face thereof so as to form a recessed portion 24'c. On the other hand, as shown in FIGS. 6 and 7, a pad 32' forming a part of a lever 29' of the tensioner device 21' has a tang-like projection 32'b receivable in the grooved or recessed portion 24'c of the plunger 24'. The recessed portion 24'c of the plunger 24' and the tang-like projection 32'b of the pad 32' engage together to inhibit rotation of the plunger 24' about the axis thereof and, thus, they 24'c, 32'b jointly form the above-mentioned plunger rotation inhibiting mechanism. As in the illustrated embodiment, the recessed portion 24'c and the projection 32'b may be so designed as to fit together with a slight gap G (FIG. 6) defined therebetween.

FIG. 9 shows a modified form of the plunger rotation inhibiting mechanism of the second embodiment, wherein the tang-like projection is formed on the lever body 30' as at 30'b in place of the pad 32'. The recessed portion 24'c of the plunger 24' is fitted over the tang-like projection 30'b formed on the lever body 30' and engageable with the tang-like projection 30'b to thereby inhibit the plunger 24 from rotating about the axis thereof. As shown in FIG. 9, the recessed portion 24'c and the projection 30'b may be so designed as to fit together with a slight gap G defined therebetween. In the modification shown in FIG. 9, the lever 29' does not have a pad such as used in the embodiment shown in FIGS. 6-8.

The plunger rotation inhibiting mechanism composed of the recessed portion 24'c of the plunger 24' and the tang-like projection 32'b, 30'b of the lever 29' (FIG. 6) operates in the same manner as that of the first embodiment shown in FIGS. 1-5 and no further description is needed.

In the illustrated embodiments, the tensioner device 21, 21' is used for applying an appropriate tension to the chain C. The tensioner device 21, 21' may be used with a belt (not shown) for applying an appropriate tension to the belt.

Additionally, although in the illustrated embodiments, the spring 25, 25' is used to urge the plunger 24, 24' in the forward or projecting direction, the tensioner device may include a hydraulic tensioner which utilizes a hydraulic pressure supplied in the housing to urge the plunger in the forward direction.

As described above, by virtue of the plunger rotation inhibiting mechanism, rotation of the plunger about the axis thereof is inhibited so that a front edge of each prong of the ratchet is always kept separating from the bottom land of a meting rack tooth on the plunger. The ratchet prong is substantially free from wear and hence has an improved degree of durability. The plunger rotation inhibiting mechanism composed of a tang-like projection and a recessed portion receiving therein the projection is easy to manufacture, does not require high machining accuracy, and can be manufactured at a relatively low cost.

## Claims

1. A tensioner device (21; 21') comprising: a tensioner unit (22; 22'); and a lever (29; 29') urged by the tensioner unit (22; 22') to turn in one direction, said tensioner unit (22; 22') including a housing (23; 23') having a plunger accommodating hole (23a; 23'a) formed therein, a plunger (24; 24') slidably fitted in the plunger accommodating hole and urged in a forward direction projecting outward from the housing (23; 23'), the plunger (24; 24') having rack teeth (24a; 24'a) formed on an outer surface of the plunger (24; 24') along the axis the plunger and a front end portion held in contact with a portion of the lever (29; 29), and a ratchet (26) pivotally mounted within a slot (23b; 23'b) formed in the housing (23; 23') and urged in one direction to engage the rack teeth (24a; 24'a) so as to prevent the plunger (24; 24') from moving backward, **characterized in that**
the tensioner device further includes a plunger rotation inhibiting mechanism (24b, 32a; 24b, 30a; 24'c, 32'b; 24'c, 30'b) disposed between the front end portion of the plunger (24; 24') and the portion of the lever (29; 29') to inhibit the plunger (24; 24') from rotating about the axis thereof such that a front edge of a prong of the ratchet is kept separating from a bottom land of a mating one of the rack teeth (24a; 24'a).

2. A tensioner device according to claim 1, wherein the plunger rotation inhibiting mechanism has a projection (24b) formed by removing opposite sides of the front end portion of the plunger (24), and a recessed portion (32a; 30a) formed in the portion of the lever (29) and receiving therein the projection (24b) of the plunger (24).

3. A tensioner device according to claim 2, wherein the lever (29) comprises a lever body (30), a shoe (31) attached to a front surface of the lever body (30), and a pad (32) attached to a back surface of the lever body (30), the recessed portion (32a) being formed in the pad (32).

4. A tensioner device according to claim 2, wherein the lever (29) comprises a lever body (30), a shoe (31) attached to a front surface of the lever body (30), and a pad (32) attached to a back surface of the lever body (30), the recessed portion (30a) being formed in the back surface of the lever body (30).

5. A tensioner device according to claim 1, wherein the plunger rotation inhibiting mechanism has a recessed portion (24'c) formed in the front end portion of the plunger (24) diametrically across an end face of the front end portion, and a projection (32'b; 30'b) formed on the portion of the lever (29) and received therein the recessed portion (24'c) of the plunger (24').

6. A tensioner device according to claim 5, wherein the lever (29') comprises a lever body (30'), a shoe (31') attached to a front surface of the lever body (30'), and a pad (32') attached to a back surface of the lever body (30'), the projection (32'b) being formed on the pad (32').

7. A tensioner device according to claim 5, wherein the lever (29') comprises a lever body (30'), and a shoe (31') attached to a front surface of the lever body (30'), the projection (30'b) being formed on a back surface of the lever body (30').
